(19) Europäisches Patentamt
European Patent Office
Office européen des brevets

(11) Veröffentlichungsnummer: **0 315 993 B1**

(12) # EUROPÄISCHE PATENTSCHRIFT

(45) Veröffentlichungstag der Patentschrift: **01.04.92**

(51) Int. Cl.$^5$: **C08G 73/14**, C08G 69/32, C08G 81/00

(21) Anmeldenummer: **88118752.0**

(22) Anmeldetag: **10.11.88**

Verbunden mit 88910006.1/0386088 (europäische Anmeldenummer/Veröffentlichungsnummer) durch Entscheidung vom 07.06.91.

Die Akte enthält technische Angaben, die nach dem Eingang der Anmeldung eingereicht wurden und die nicht in dieser Patentschrift enthalten sind.

(54) **Lösliche und/oder schmelzbare Polyamid-Polyamid-, Polyamid-Polyamidimid- und Polyamid-Polyimid-Blockcopolymere.**

(30) Priorität: **12.11.87 DE 3738458**

(43) Veröffentlichungstag der Anmeldung: **17.05.89 Patentblatt 89/20**

(45) Bekanntmachung des Hinweises auf die Patenterteilung: **01.04.92 Patentblatt 92/14**

(84) Benannte Vertragsstaaten: **AT BE CH DE ES FR GB GR IT LI LU NL SE**

(56) Entgegenhaltungen:
**EP-A- 0 162 606**
**EP-A- 0 210 036**

**CHEMICAL ABSTRACTS, Band 100, Nr. 22, 28. Mai 1984, Seite 17, Nr. 175555v, Columbus, Ohio, US; & JP-A-58 222 112 (MITSUI TOATSU CHEMICALS, INC.) 23-12-1983**

(73) Patentinhaber: **Chemie Linz Gesellschaft m.b.H.**
**St.Peter-Strasse 25**
**A-4021 Linz(AT)**

(72) Erfinder: **Greber, Gerd**
**Anzengruberstrasse 11**
**A-2540 Bad Vöslau(AT)**
Erfinder: **Gruber, Heinrich**
**Cottagegasse 82**
**A-1190 Wien(AT)**
Erfinder: **Sychra, Marcel**
**Friedhofstrasse 44/11**
**A-2103 Langenzersdorf(AT)**

(74) Vertreter: **Kunz, Ekkehard, Dr.**
**Chemie Holding AG Patentwesen St. Peter-Strasse 25**
**A-4021 Linz(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 315 993 B1

## Beschreibung

Neue lösliche und/oder schmelzbare Polyamid-Polyamid-, Polyamid-Polyamidimid- und Polyamid-Polyimid-Blockcopolymere.

Die Erfindung beschreibt neue lösliche und/oder schmelzbare Polyamid-Polyamid-, Polyamid-Polyamidimid- und Polyamid-Polyimid-Blockcopolymere und Verfahren zu deren Herstellung.

Die bis heute technisch wichtigsten thermostabilen Polymere sind die vollaromatischen Polyimide, Polyamidimide und Polyamide. Insbesondere die Polyimide weisen extreme Thermostabilitäten auf, sind aber weder schmelzbar noch löslich und daher nur aufwendig und teuer zu verarbeiten.

Auch aromatische Polyamide auf Basis von aromatischen Diaminen und aromatischen Dicarbonsäuren, wie z . B. Poly-p-phenylenterephthalamid, Poly-m-phenylenisophthalamid oder Poly-p-benzamid, zeichnen sich durch hervorragende Thermostabilitäten aus, sind aber ebenfalls nicht schmelzbar, so daß sie nicht thermoplastisch verarbeitet werden können. Zudem sind sie in den meisten organischen Lösungsmitteln unlöslich oder nur wenig löslich, wodurch auch die Verarbeitung aus Lösung zu Fasern oder Folien mit großen Schwierigkeiten verbunden ist. Polyamide auf Basis von aromatischen Dicarbonsäuren und aromatischen Diaminen, beispielsweise dem 4,4'-Bis(4-aminophenylthio)diphenylsulfon, sind aus EP-A-162.606 bekannt.

Produkte mit vergleichbarem Eigenschaftsprofil stellen die Polyamidimide dar, die beispielsweise aus aromatischen Tricarbonsäuremonoanhydriden und aromatischen Diaminen hergestellt werden (U.S.Patent 3,895,064). Sie sind in polaren organischen Lösungsmitteln löslich, einige zeigen thermoplastische Eigenschaften, im Vergleich zu den aromatischen Polyimiden besitzen sie aber eine geringere Thermostabilität.

Alle Versuche zur Entwicklung von schmelzbaren oder besser löslichen thermostabilen Polymeren, z. B. durch Veränderung der chemischen Struktur, etwa durch statistischen Einbau von flexiblen Kettenelementen ($CH_2$-, -O-, -S-, -CO-) oder sterisch anspruchsvollen Gruppen, beispielsweise in Polyamiden (US-PS 4 621 134), Polyimiden (JP-Kokai 1985 - 15228) oder Polyamidimiden (US-PS 4 724 257), führten bisher zu einer meist beträchtlichen Einbuße an Thermostabilität.

Die eigentliche Problemlösung auf dem Gebiet der thermostabilen Polymeren liegt also noch immer auf der Entwicklung von Produkten mit hoher Thermostabilität und gleichzeitig guter Verarbeitbarkeit.

Aufgabe der vorliegenden Erfindung war es, neue thermostabile Polymere zu entwickeln, die bei hoher Thermostabilität löslich und/oder schmelzbar und somit nach herkömmlichen Methoden verarbeitbar sind.

Es wurde nun gefunden, daß diese Aufgabe mit Hilfe von Polyamid-Polyamid- bzw. Polyamid-Polyamidimid-, bzw. Polyamid-Polyimid - Blockcopolymeren, in denen die Bausteine nicht statistisch, sondern in Blockform angeordnet sind, gelöst werden kann.

Gegenstand der vorliegenden Erfindung sind demnach lösliche und/oder schmelzbare Polyamid-Polyamid-(PA-$PA_1$-), Polyamid-Polyamidimid-(PA-PAI-) oder Polyamid-Polyimid-(PA-PI-) Blockcopolymere der allgemeinen Formel I des Formelblattes, in der n eine ganze Zahl von 1 bis 200,
x eine ganze Zahl von 1 bis 20,
$R_1$ einen divalenten aromatischen Rest,
R den Rest der allgemeinen Formel II des Formelblattes bedeuten, sowie

a) im Falle der PA-$PA_1$-Blockcopolymeren
X den Rest -NH-,
Y den Rest -NH-CO-,
wobei jeweils N an R gebunden ist und
B einen Rest der allgemeinen Formel III des Formelblattes bedeuten, worin y eine ganze Zahl von 1 bis 20,
$R_2$ einen divalenten aromatischen Rest und
$R_3$ einen von R verschiedenen, divalenten aromatischen Rest bedeuten,

b) im Falle der PA-PAI-Blockcopolymeren entweder:
X den Rest = N-,
Y den Rest -NH- und
B den Rest der allgemeinen Formel IV des Formelblattes bedeuten, worin Ar für einen trivalenten aromatischen Rest steht,
oder:
X und Y den Rest =N- und
B den Rest der allgemeinen Formel V des Formelblattes bedeuten, worin y' für eine ganze Zahl von 0 - 20 und $R_3$' für R oder einen divalenten aromatischen Rest steht und Ar die obige Bedeutung hat,

c) im Falle der PA-PI-Blockcopolymeren
X und Y den Rest =N- und

B den Rest der allgemeinen Formel VI des Formelblattes bedeuten, worin y' für eine ganze Zahl von 0 - 20 und $R_3$' für R oder einen divalenten aromatischen Rest und Ar für einen tetravalenten aromatischen Rest steht.

Die divalenten aromatischen Reste $R_1$ und $R_2$ leiten sich dabei von zwei gleichen oder verschiedenen aromatischen Dicarbonsäuren ab, sodaß sie jeweils über eine C-Bindung mit dem Rest der Polymerkette verbunden sind. Die divalenten aromatischen Reste R, $R_3$ und $R_3$' leiten sich von aromatischen Diaminen ab, sodaß sie jeweils über eine N-Bindung mit dem Rest der Polymerkette verbunden sind. Erfindungsgemäß kommen alle aromatischen Reste in Frage, die sich von den entsprechenden Dicarbonsäuren bzw. ihren Derivaten oder den entsprechenden Diaminen ableiten. Beispiele für $R_1$ und $R_2$ sind Reste, die sich von Terephthalsäure, Isophthalsäure, 4,4'-Diphenyldicarbonsäure, 4,4'-Diphenyletherdicarbonsäure, 4,4'-Diphenylsulfiddicarbonsäure, 4,4'-Benzophenondicarbonsäure, 4,4'-Diphenylsulfondicarbonsäure, 4,4'-Diphenylmethandicarbonsäure oder 1,5-Naphthalindicarbonsäure ableiten bzw. deren Gemische. Besonders bevorzugt ist der Benzolrest.

Beispiele für $R_3$ und $R_3$' sind aromatische Reste, die gegebenenfalls substituiert sind, beispielsweise durch Alkyl - oder Alkoxygruppen bzw. durch Halogene. $R_3$ bzw. $R_3$' kann auch aus mehreren derartigen aromatischen Resten bestehen, die entweder direkt oder über Brückenglieder miteinander verbunden sind. Als Brückenglieder kommen z. B. -O-, -CH2, $-C(CH_3)_2-$, -S-, -SO-, $-SO_2-$, -CO-, -CO-O-, -CO-NH-, -NH-, -N-(Alkyl)-mit 1 - 6 C-Atomen im Alkylteil, -N(Aryl)- mit 6 bis 20 C-Atomen im Arylteil oder -N = N- in Frage. Das erfindungsgemäße Polymer kann auch Gemische dieser Reste enthalten. Bevorzugte Reste $R_3$ bzw. $R_3$' sind der Benzol-, Diphenylmethan-und Diphenylsulfon-Rest.

Erfindungsgemäß kommen alle bekannten tri- oder tetravalenten aromatischen Reste Ar in Frage, die sich insbesondere von den entsprechenden Tri- oder Tetracarbonsäuren bzw. ihren Derivaten, wie beispielsweise Anhydriden, Estern oder Säurechloriden ableiten, sowie deren Gemische. Beispiele dafür sind Reste von Aromaten, kondensierten Aromaten, Heteroaromaten, sowie deren Derivaten. Bevorzugte tetravalente Reste Ar sind der Benzolrest und der Benzophenonrest. Als trivalenter Rest Ar ist der Benzolrest bevorzugt.

Die erfindungsgemäßen Blockcopolymeren können dadurch hergestellt werden, daß man einen Polyamidblock der allgemeinen Formel VII des Formelblattes

a) im Falle der PA-$PA_1$-Blockcopolymeren mit einem Polyamidblock der allgemeinen Formel VIII des Formelblattes worin y eine ganze Zahl von 1 -20 bedeutet und in der Z für Halogen, OH, O-Alkyl mit 1 bis 6 C-Atomen oder O-Aryl mit 6 bis 20 C-Atomen steht,

b) im Falle der PA-PAI-Blockcopolymeren entweder mit einem Polyamidamidsäureblock der allgemeinen Formel IX des Formelblattes, worin y' eine ganze Zahl von 0 bis 20 bedeutet, oder mit Trimellithsäure bzw. deren Ester, Anhydrid oder Anhydridchlorid,

c) im Falle der PA-PI-Blockcopolymeren mit einem Polyamidsäureblock der allgemeinen Formel X des Formelblattes, worin y' eine ganze Zahl von 0 bis 20 bedeutet,

in annähernd stöchiometrischen Mengen umsetzt, und die im Falle der PA-PAI- und PA-PI-Blockcopolymeren zunächst entstehenden Polyamidamid- bzw. Polyamidsäuren chemisch oder thermisch cyclisiert.

Die Herstellung der Blöcke gemäß allgemeinen Formeln VII bis X des Formelblattes kann in an sich bekannter Weise in stark polaren Lösungsmitteln, wie z. B. Dimethylformamid (DMF), Dimethylacetamid (DMA), N-Methylpyrrolidon (NMP), Dimethylsulfoxid (DMSO), Tetramethylharnstoff oder Hexamethylphosphorsäuretriamid erfolgen. Die Reaktionstemperatur kann je nach verwendeten Ausgangsstoffen und gewünschtem Endprodukt innerhalb eines weiten Bereiches schwanken.

Bei Verwendung der reaktiven Säurechloride, Anhydride bzw. Anhydridchloride liegen die Temperaturen zwischen -30 und +30 °C. Mit den weniger reaktiven Säuren bzw. Säureestern benötigt man Reaktionstemperaturen bis 150 °C.

Polyamid-Blöcke mit Amino-Endgruppen der allgemeinen Formel VII des Formelblattes können beispielsweise dadurch erhalten werden, daß man ein aromatisches Dicarbonsäurederivat, z. B. Terephthalsäure- oder Isophthalsäuredichlorid, mit überschüssigem Diamin der Formel XI des Formelblattes umsetzt, wobei die Länge der Blöcke in einfacher Weise innerhalb weiter Grenzen durch das vorgegebene Molverhältnis der Reaktionspartner - d. h. durch den Überschuß an Diamin -variiert werden kann. Im Fall der Verwendung von Dicarbonsäuredichloriden kann zur Entfernung der bei der Kondensation entstehenden HCl ein Säurefänger, beispielsweise Triäthylamin oder Pyridin, eingesetzt werden.

Polyamid-Blöcke mit Carbonsäure-, Carbonsäurehalogenid- oder Carbonsäureester-Endgruppen der allgemeinen Formel VIII des Formelblattes können dadurch erhalten werden, daß man ein Diamin der allgemeinen Formel XII des Formelblattes mit einem Dicarbonsäurederivat, z. B. mit Terephthaloyl- oder Isophthaloylchlorid, im Überschuß umsetzt. Analog können Polyamidamidsäure-Blöcke der allgemeinen Formel IX bzw. Polyamidsäure-Blöcke der allgemeinen Formel X des Formelblattes durch Umsetzung eines

Diamins der allgemeinen Formel XIII des Formelblattes mit überschüssigem Tricarbonsäure-bzw. Tetracarbonsäurederivat, z. B. Trimellithsäureanhydridchlorid bzw. Benzophenontetracarbonsäuredianhydrid, erhalten werden. Dabei kann die Länge der Blöcke ebenfalls durch das vorgegebene Molverhältinis der Reaktionspartner, d. h. durch den Überschuß an Di- bzw. Tri-bzw. Tetracarbonsäurederivat, variiert werden.

Das angestrebte Molekulargewicht der Blöcke kann durch Endgruppenanalyse der cyclisierten Produkte nach Einführung von Halogen - z. B. durch Umsetzung der Blöcke gemäß allgemeiner Formel VII des Formelblattes mit 4-Chlorbenzaldehyd, bzw. der Blöcke gemäß allgemeiner Formel VIII, IX und X des Formelblattes mit 4-Bromanilin -überprüft werden.

Zur Synthese der Polyamid-Blöcke gemäß allgemeinen Formel VII und VIII des Formelblattes werden bevorzugt Iso- und Terephthalsäurederivate eingesetzt, erfindungsgemäß eignen sich hierfür aber auch andere bekannte aromatische Dicarbonsäuren bzw. ihre organischen oder anorganischen Ester, wie z. B. Terephthalsäure, Isophthalsäure, 4,4'-Diphenyldicarbonsäure, 4,4'-Diphenyletherdicarbonsäure, 4,4'-Diphenylsulfiddicarbonsäure, 4,4'-Benzophenondicarbonsäure, 4,4'-Diphenylsulfondicarbonsäure, 4,4'-Diphenylmethandicarbonsäure oder 1,5-Naphthalindicarbonsäure.

Zur Synthese der Polyamidamidsäure-Blöcke gemäß der allgemeinen Formel IX bzw. der Polyamidsäure-Blöcke gemäß der allgemeinen Formel X des Formelblattes werden bevorzugt Trimellithsäureanhydridchlorid bzw. Benzophenontetracarbonsäuredianhydrid oder Pyromellithsäuredianhydrid verwendet. Erfindungsgemäß können aber auch andere, aus der Chemie der thermostabilen Polymere bekannte Tri- bzw. Tetracarbonsäurederivate eingesetzt werden, wie z. B. die Tricarbonsäurederivate

4-(4-(Chlorcarbonyl)phenoxy)phthalsäureanhydrid
4-(4-(Chlorcarbonyl)benzoyl)phthalsäureanhydrid
4-(4-(Chlorcarbonyl)phenylsulfonyl)phthalsäureanhydrid
4-(4-(Chlorcarbonyl)benzyl)phthalsäureanhydrid
bzw. die Tetracarbonsäurederivate
4,4', 5,5', 6,6'-Hexafluorbenzophenon-2,2', 3,3'-tetracarbonsäuredianhydrid
3,3', 4,4'-Diphenyl-tetracarbonsäuredianhydrid
2,2', 3,3'-Diphenyl-tetracarbonsäuredianhydrid
Bis(2,3-dicarboxyphenyl)methan-dianhydrid
Bis(3,4-dicarboxyphenyl)methan-dianhydrid
2,2-Bis(3,4-dicarboxyphenyl)propan-dianhydrid
2,2-Bis(2,3-dicarboxyphenyl)propan-dianhydrid
Bis(3,4-dicarboxyphenyl)äther-dianhydrid
Bis(2,3-dicarboxyphenyl)äther-dianhydrid
Bis(3,4-dicarboxyphenyl)sulfon-dianhydrid
Bis(3,4-dicarboxyphenyl)phenylphosphonat-dianhydrid
3,3', 4,4'-Tetracarboxybenzoyloxybenzol-dianhydrid
1,4,5,8-Naphthalin-tetracarbonsäuredianhydrid
2,3,6,7-Naphthalin-tetracarbonsäuredianhydrid
1,2,5,6-Naphthalin-tetracarbonsäuredianhydrid
2,3,6,7-Tetrachlornaphthalin-1,4,5,8-tetracarbonsäuredianhydrid
Phenanthren-1,8,9,10-tetracarbonsäuredianhydrid
3,4,9,10-Perylen-tetracarbonsäuredianhydrid
Thiophen-2,3,4,5-tetracarbonsäuredianhydrid
Pyrazin-2,3,5,6-tetracarbonsäuredianhydrid
Pyridin-2,3,5,6-tetracarbonsäuredianhydrid.

Anstelle der Blöcke gemäß allgemeiner Formel VIII, IX und X des Formelblattes mit Carbonsäure-, Carbonsäurehalogenid- oder Carbonsäureester- bzw. Anhydrid-Endgruppen können erfindungsgemäß zur Verknüpfung der Blöcke gemäß allgemeiner Formel VII auch monomere Tri- und Tetracarbonsäuren bzw. deren Derivate eingesetzt werden, z. B. Trimellithsäureanhydridchlorid bzw. Benzophenonetetracarbonsäuredianhydrid.

Als aromatische Diamine der allgemeinen Formel XII bzw. XIII des Formelblattes kommen Verbindungen in Betracht, in denen $R_3$ bzw. $R_3'$ einen oder mehrere, direkt oder über Brückenglieder miteinander verbundene aromatische Reste darstellt, die gegebenenfalls weiter substituiert sind, beispielsweise durch Alkyl-oder Alkoxygruppen oder durch Halogenatome. Als geeignete Brückenglieder seien beispielsweise -O-, $-CH_2-$, $-C(CH_3)_2-$, -S, -SO-, $-SO_2-$, -CO-, -CO-O-, -CO-NH-, - N = N-, -NH- oder -NY-genannt, wobei Y einen Alkylrest mit 1 - 6 C-Atomen oder einen Aryl-Rest darstellt.

Erfindungsgemäß kann man - etwa um Produkte mit bestimmten Glastemperaturen zu erhalten - zur Synthese der Blöcke gemäß allgemeinen Formeln VII bis X des Formelblattes auch Gemische von

Dicarbonsäurederivaten, bzw. Tricarbonsäure- bzw. Tetracarbonsäurederivaten und/oder Diaminen der Formel XII des Formelblattes einsetzen.

Die Synthese der erfindungsgemäßen Blockcopolymeren der allgemeinen Formel I des Formelblattes gelingt bevorzugt durch Mischen stöchiometrischer Mengen der in polaren Lösungsmitteln gelösten Polyamid-Blöcke der allgemeinen Formel VII des Formelblattes mit Lösungen der Polyamid-Blöcke gemäß allgemeiner Formel VIII, bzw. Polyamidamidsäure-Blöcke gemäß allgemeiner Formel IX bzw. Polyamidsäure-Blöcke gemäß allgemeiner Formel X des Formelblattes , wobei so lange gerührt wird, bis die inhärente Viskosität einen bestimmten Wert oder ein Maximum erreicht hat und die Polykondensation bzw. Polyaddition beendet ist. Die erreichten inhärenten Viskositäten liegen in Abhängigkeit von der Stöchiometrie und damit von der Reinheit der eingesetzten Blöcke zwischen 0,1 und 4,0 dl/g (0,5 %, 25 °C). Wie bei allen Stufenreaktionen ist das Erreichen ausreichender Viskositäten - also Molekulargewichte - von der exakten Stöchiometrie der reaktiven Gruppen und damit vom Reinheitsgrad der eingesetzten Komponenten abhängig. Die Reaktionstemperaturen liegen je nach verwendeten Ausgangsstoffen zwischen -30 und +30 °C, bevorzugt bei -10 bis +10 °C. Die Konzentration der Reaktionspartner wird zweckmäßigerweise zwischen 10 und 40 % gehalten, für höhere Konzentrationen kann die notwendige Durchmischung und Kühlung ein Limit darstellen.

Die Polyamid-Blöcke der allgemeinen Formel VII des Formelblattes können mit den Blöcken gemäß allgemeinen Formeln VIII, IX bzw. X des Formelblattes bevorzugt auch ohne aus ihrem Reaktionsgemisch isoliert zu werden zu den gewünschten Blockcopolymeren umgesetzt werden, wobei beim Ansatz die Äquivalenz der funktionellen Gruppen zu berücksichtigen ist.

Die resultierenden Lösungen der Polyamid-Polyamid-(PA-$PA_1$-) bzw. Polyamid-Polyamidamidsäure-(PA-PAAS-) bzw. Polyamid-Polyamidsäure-(PA-PAS-)-Blockcopolymeren können in bekannter Weise in Folien und Fasern übergeführt werden. Die PA-PAAS- bzw. PA-PAS-Blockcopolymeren können beispielsweise thermisch unter Wasserabspaltung zu PA-PAI- bzw. PA-PI-Blockcopolymeren cyclisiert werden, wobei zum Schluß für eine quantitative Cyclisierung Temperaturen bis etwa 300 °C notwendig sein können. Grundsätzlich sind solche Lösungen auch zur Laminierung einsetzbar, wobei jedoch das abgespaltene Wasser stört, so daß man hier zweckmäßigerweise den großen Vorteil der erfindungsgemäßen Blockcopolymeren ausnützt, daß sie auch in der cyclisierten Form noch gut in polaren Lösungsmitteln löslich sind.

Will man die PA-PAI- bzw. PA-PI-Blockcopolymeren dagegen in Pulverform isolieren - etwa als Preßpulver zur thermoplastischen Verformung - dann cyclisiert man beispielsweise chemisch mit Hilfe wasseraufnehmender Agentien, wie z. B. Essigsäureanhydrid, gegebenenfalls in Gegenwart von Pyridin oder anderen Basen. Die so erhaltenen PA-PAI - bzw. PA-PI-Blockcopolymeren können nun entweder unter Druck thermoplastisch verformt oder in polaren Lösungsmitteln gelöst werden. Aus solchen Lösungen kann man Folien, Fasern und Laminate herstellen, wobei der große Vorteil darin besteht, daß nach Entfernen des Lösungsmittels bereits fertig cyclisierte Polyimide und Polyamidimide vorliegen. Es muß also kein Wasser mehr abgespalten werden, was vor allem für Laminierungen von großer Bedeutung ist.

Die Thermostabilitäten der erfindungsgemäßen PA-$PA_1$-, PA-PAI- und PA-PI-Blockcopolymeren liegen je nach Zusammensetzung bei 450 bis 505 °C, gemessen in Luft mittels thermogravimetrischer Analyse (TGA) bei einer Aufheizgeschwindigkeit von 10 °C/min (5 % Gewichtsverlust).

Die Glastemperaturen liegen zwischen 195 und 265 °C. Die Blockcopolymere weisen auch ausgezeichnete mechanische Eigenschaften auf (Zugfestigkeit ca. 75 bis 106 MPa, E-Modul ca. 1,9 bis 2,6 GPa, Reißdehnung ca. 6 bis 14 %). Sie sind in den oben genannten polaren Lösungsmitteln in Konzentrationen bis etwa 30 Gew.% löslich und unter Druck thermoplastisch verformbar.

Beispiel 1

Herstellung eines Polyamid-Polyimid-Blockcopolymeren (PA-PI-BCP)

a) Herstellung eines oligomeren Diamines aus Isophthalsäuredichlorid (IPDCl) und 4,4′-Bis(4-aminophenylthio)diphenylsulfon (BDS).

Ansatz:

4,6464 g (10 mMol) BDS
1,5226 g (7,5 mMol) IPDCl
2,1 ml (15 mMol) Triäthylamin
45 ml abs. Dimethylacetamid (DMA)

Die Apparatur, bestehend aus einem 100 ml-Dreihalskolben mit mechanischem Rührer, Tropftrichter,

Trockenrohr und Stickstoffeinleitung, wird im trockenen Stickstoffstrom ausgeflammt. Das Diamin (BDS) wird unter Stickstoff in 35 ml DMA gelöst und mit Eis/NaCl auf ca. -10 ° C abgekühlt. Zu diesem abgekühlten Reaktionsgemisch wird IPDCl auf einmal zugegeben, mit restlichem DMA nachgespült, 2 Stunden bei -10 ° C und 2 Stunden bei Raumtemperatur gerührt. Dann wird zum Abfangen der entstandenen HCl bei ca. 10 ° C das Triäthylamin in 5 ml DMA zugetropft, das Reaktionsgemisch 3 Stunden bei Raumtemperatur gerührt und anschließend über Nacht in der Tiefkühltruhe bei -15 ° C aufbewahrt. Das ausgefallene Triäthylaminhydrochlorid wird unter Stickstoff mittels einer Umkehrfritte abfiltriert und dreimal mit insgesamt 10 ml DMA gewaschen. Man erhält eine Lösung eines oligomeren Diamines mit einer inhärenten Viskosität von 0,17 dl/g (0,5 % in DMA, 25 ° C).

b) Herstellung eines Polyamidsäure-Blockes mit Anhydrid-Endgruppen

Ansatz:

3,7314 g (11,6 mMol) Benzophenontetracarbonsäuredianhydrid (BTDA)
1,7846 g (9,0 mMol) 4,4′-Methylendianilin (MDA)
30 ml abs. DMA

BTDA wird in 15 ml DMA unter Stickstoff suspendiert. Dann wird unter Rühren bei 5 - 20 ° C MDA, gelöst in 15 ml DMA zugetropft, wobei das BTDA langsam in Lösung geht. Nach einer Stunde Rühren bei Raumtemperatur erhält man eine Lösung einer Polyamidsäure mit einer inhärenten Viskosität von 0,14 dl/g (0,5 % in DMA, 25 ° C).

c) Herstellung eines Polyamid-Polyamidsäure-Blockcopolymeren (PA-PAS-BCP)

Zu der nach Beispiel 1b erhaltenen Lösung der Polyamidsäure mit den Anhydrid-Endgruppen läßt man unter Stickstoff innerhalb von 20 Minuten bei 5 ° C die nach Beispiel 1a erhaltene Lösung des oligomeren Diamines zutropfen. Nach 20 Stunden Rühren bei Raumtemperatur erhält man eine Lösung des Polyamid-Polyamidsäure-Blockcopolymeren mit einer inherenten Viskosität von 0,47 dl/g (0,5 % in DMA, 25 ° C), die entweder thermisch oder chemisch zu einem Polyamid-Polyimid-Blockcopolymer cyclisiert werden kann.

d) Herstellung einer Folie aus dem nach Beispiel 1c erhaltenen PA-PAS-BCP

Erhöht man die Konzentration des nach Beispiel 1c erhaltenen Polyamid-Polyamidsäure-Blockcopolymeren auf ca. 30 Gew.%, - was entweder durch entsprechend konzentriertes Arbeiten oder aber durch Einengen der gewonnenen PA-PAS-BCP Lösung erreicht werden kann - dann kann die erhaltene Polymerlösung direkt zur Folienherstellung verwendet werden. Hierzu wird die Polymerlösung mit Hilfe eines Folienziehgerätes (0,5 mm Spalthöhe) auf eine gereinigte Glasplatte aufgetragen. Die thermische Überführung der PA-PAS-BCP in das PA-PI-BCP erfolgt beispielsweise nach folgendem Temperaturprogramm im Vakuum:
16 Stunden bei 50 ° C
0,5 Stunden bei 70 ° C
0,5 Stunden bei 90 ° C
0,5 Stunden bei 100 ° C
0,5 Stunden bei 120 ° C
0,5 Stunden bei 140 ° C
0,5 Stunden bei 150 ° C
2 Stunden bei 180 ° C
0,5 Stunden bei 200 ° C
1 Stunde bei 230 ° C
1 Stunde bei 240 ° C
1 Stunde bei 240 ° C

Dabei erfolgt eine vollständige Cyclisierung, wie aus dem IR-Spektrum der Folie zu ersehen ist. Die thermischen und mechanischen Eigenschaften sind in Tabelle 2 angegeben.

e) Herstellung eines Preßpulvers aus dem nach 1c erhaltenen PA-PAS-BCP

Zur Herstellung eines Preßpulvers werden ca. 10 g einer etwa 20 Gew.%-Lösung des nach 1c erhaltenen PA-PAS-BCP in 30 ml eines Gemisches aus 3 Volumenteilen Pyridin und 2 Volumenteilen

Essigsäureanhydrid eingetropft und 20 Stunden bei Raumtemperatur gerührt, wobei eine gelbe, gelartige Suspension ausfällt. Diese wird auf ein Gemisch aus je einem Volumenteil Wasser und Methanol getropft und die entstehende Suspension mit einem "Turrax"-Mixer homogenisiert. Das entstandene gelbe Pulver wird abgenutscht, gründlich mit Methanol gewaschen und bei 130 °C im Vakuumtrockenschrank gewichtskonstant getrocknet. Ohne Zusatz von Pyridin erhält man Produkte mit vergleichbaren Eigenschaften.

Beispiel 2 und 3

Analog den im Beispiel 1a bis e angegebenen Arbeitsvorschriften erhält man die in den Tabellen 1 und 2 angegebenen oligomeren Diamine, Polyamidsäure-Blöcke, Polyamid-Polyamidsäure-Blockcopolymere und Folien bzw. Preßpulver aus den Polyamid-Polyimid-Blockcopolymeren.

Beispiel 4

Herstellung eines Polyamid-Polyamidimid-Blockcopolymeren (PA-PAI-BCP)

a) Herstellung eines oligomeren Diamines aus 4,4′-Bis(4-aminophenylthio)-diphenylsulfon (BDS) und Isophthalsäuredichlorid (IPDCl)

Ansatz

3,6414 g (7,8 mMol) BDS
1,1360 g (5,6 mMol) IPDCl
1,57 ml (11,2 mMol) Triäthylamin
40 ml abs. DMA

Nach dem im Beispiel 1a beschriebenen Verfahren wird eine Lösung eines oligomeren Diamines mit einer inhärenten Viskosität von 0,14 dl/g (0,5 % in DMA, 25 °C) erhalten.

b) Herstellung eines Polyamidamidsäure-Blockes mit Anhydrid-Endgruppen

Ansatz:

2,3584 g (11,2mMol) Trimellithsäureanhydridchlorid (TMACl)
1,7766 g (9,0 mMol) 4,4′-Methylendianilin (MDA)
1,57 ml (11,2 mMol) Triäthylamin
40 ml abs. DMA

MDA wird in 25 ml DMA unter Stickstoff gelöst und unter Rühren bei ca. -15 °C portionsweise TMACl in fester Form zugegeben. Nach einer Stunde Rühren bei -5 °C und drei Stunden Rühren bei Raumtemperatur wird bei 5 -10 °C das Triäthylamin in 8 ml DMA zugetropft, drei Stunden bei Raumtemperatur gerührt und anschließend über Nacht bei ca. -15 °C in der Tiefkühltruhe aufbewahrt. Das ausgefallene Triäthylaminhydrochlorid wird unter Stickstoff mittels einer Umkehrfritte abfiltriert und mit insgesamt 10 ml DMA gewaschen. Man erhält eine Lösung einer Polyamidamidsäure mit einer inhärenten Viskosität von 0,19 dl/g (0,5 % in DMA, 25 °C).

c) Herstellung eines Polyamid-Polyamidamidsäure-Blockcopolymeren (PA-PAAS-BCP)

Zu der nach Beispiel 4b) erhaltenen Lösung der Polyamidamidsäure mit den Anhydrid-Endgruppen läßt man unter Stickstoff innerhalb von 20 Minuten bei 5 °C die nach Beispiel 4a) erhaltene Lösung des oligomeren Diamines zutropfen. Nach etwa 20 Stunden Rühren bei Raumtemperatur erhält man eine Lösung des Polyamid-Polyamidamidsäure-Blockcopolymeren mit einer inhärenten Viskosität von 1,01 dl/g (0,5 % in DMA, 25 °C), das analog Beispiel 1d) bzw. 1e) thermisch bzw. chemisch zum Polyamid-Polyamidimid-Blockcopolymer cyclisiert werden kann.

Beispiel 5

Herstellung eines Polyamid-Polyamid-Blockcopolymeren (PA-PA-BCP)

a) Herstellung eines oligomeren Diamins aus Terephthalsäuredichlorid (TPDCl) und 4,4′-Bis(4-aminophenylthio)diphenylsulfon (BDS)

Ansatz:

2,3232 g (5 mMol) BDS
0,8121 g (4 mMol) TPDCl
1,12 ml (8 mMol) Triäthylamin
10 ml abs. DMA
15 ml abs. Hexamethylphsophorsäuretriamid (HMP)

Die Apparatur, bestehend aus einem 100 ml-Dreihalskolben mit mechanischem Rührer, Tropftrichter, Trockenrohr und Stickstoffeinleitung, wird im trockenen Stickstoffstrom ausgeflammt. Das Diamin (BDS) wird unter Stickstoff in 15 ml des Lösungsmittelgemisches aus DMA und HMP gelöst und mit Eis/NaCl auf ca. -10 ° C abgekühlt. Zu diesem abgekühlten Reaktionsgemisch wird TPDCl auf einmal zugegeben, mit dem restlichen Lösungsmittelgemisch aus DMA und HMP nachgespült, 2 Stunden bei -10 ° C und 2 Stunden bei Raumtemperatur gerührt. Dann wird zum Abfangen der entstandenen HCl bei ca. 10 ° C das Triäthylamin in 5 ml DMA zugetropft und das Reaktionsgemisch 1 Stunde bei Raumtemperatur gerührt. Das ausgefallene Triäthylaminhydrochlorid wird unter Stickstoff mittels einer Umkehrfritte abfiltriert und dreimal mit insgesamt 10 ml DMA gewaschen.

Man erhält eine Lösung eines oligomeren Diamines mit einer inhärenten Viskosität von 0,24 dl/g (0,5 % in DMA, 25 ° C).

b) Herstellung eines oligomeren Dicarbonsäurechlorides aus Isophthalsäuredichlorid (IPDCl) und 4,4′-Methylendianilin (MDA)

Ansatz:

0,7932 g (4 mMol) MDA
1,0151 g (5 mMol) IPDCl
1,40 ml (10 mMol) Triäthylamin
30 ml abs. DMA

Die Apparatur, bestehend aus einem 100 ml-Dreihalskolben mit mechanischem Rührer, Tropftrichter, Trockenrohr und Stickstoffeinleitung, wird im trockenen Stickstoffstrom ausgeflammt. IPDCl wird unter Stickstoff in 10 ml DMA gelöst und mit Eis/NaCl auf ca. -10 ° C abgekühlt. Zu diesem abgekühlten Reaktionsgemisch wird das Diamin (MDA), in 20 ml DMA gelöst, während ca. 10 Minuten zugetropft und daraufhin weitere 15 Minuten bei -10 ° C und 30 Minuten bei Raumtemperatur gehalten. Man erhält eine Lösung eines oligomeren Dicarbonsäurechlorides, die direkt zur weiteren Polykondensation eingesetzt wird.

c) Herstellung eines Polyamid-Polyamid-Blockcopolymeren (PA-PA-BCP)

Zu der nach Beispiel 5b) erhaltenen Lösung des oligomeren Dicarbonsäurechlorides läßt man unter Stickstoff innerhalb von 20 Minuten bei 5 ° C die nach Beispiel 5a) erhaltene Lösung des oligomeren Diamines zutropfen. Nach 3 Stunden Rühren bei Raumtemperatur wird das Reaktionsgemisch auf ca. 5 ° C abgekühlt, zum Abfangen der entstandenen HCl Triäthylamin in 5 ml DMA zugetropft und das Reaktionsgemisch über Nacht bei Raumtemperatur weitergerührt. Die viskose Polymerlösung wird unter starkem Rühren in 300 ml heißes Wasser gegossen, das ausgefallene, zerkleinerte PA-PA-BCP mehrmals mit Wasser und anschließend mit Aceton gewaschen und im Vakuumtrockenschrank bei 80 ° C gewichtskonstant getrocknet.

d) Herstellung einer Folie aus dem nach Beispiel 5c) erhaltenen PA-PA-BCP

Eine etwa 25 Gew.%ige Lösung des nach Beispiel 5c) erhaltenen PA-PA-BCP in DMA wird mit Hilfe eines Folienziehgerätes (0,5 mm Spalthöhe) auf eine gereinigte Glasplatte aufgezogen und innerhalb von 24 Stunden nach folgendem Temperaturprogramm im Vakuum erhitzt:

16 Stunden bei 50 ° C
0,5 Stunden bei 70 ° C
0,5 Stunden bei 90 ° C
0,5 Stunden bei 100 ° C
0,5 Stunden bei 120 ° C

0,5 Stunden bei 140 °C
0,5 Stunden bei 150 °C
2 Stunden bei 160 °C
2 Stunden bei 170 °C
2,5 Stunden bei 180 °C

Beispiel 6 bis 8:

Analog den im Beispiel 5a) bis 5d) angegebenen Arbeitsvorschriften erhält man die in den Tabellen 1 und 2 angegebenen oligomeren Diamine, Dicarbonsäurechloride und Polyamid-Polyamid - Blockcopolymeren.

Beispiel 9:

Herstellung eines Polyimides

a) Herstellung eines oligomeren Diamines aus Terephthalsäuredichlorid (TPDCl) und 4,4'-Bis(4-aminophenylthio)diphenylsulfon (BDS)

Ansatz:

6,9696 g (15 mMol) BDS
2,0302 g (10 mMol) TPDCl
30 ml abs. DMA

Die Apparatur, bestehend aus einem 100 ml-Dreihalskolben mit mechanischem Rührer, Tropftrichter, Trockenrohr und Stickstoffeinleitung, wird im trockenen Stickstoffstrom ausgeflammt. Das Diamin (BDS) wird unter Stickstoff in 20 ml DMA gelöst und mit Eis/NaCl auf ca -10 °C abgekühlt. Zu diesem abgekühlten Reaktionsgemisch wird TPDCl auf einmal zugegeben, mit restlichem DMA nachgespült, 2 Stunden bei -10 °C und 2 Stunden bei Raumtemperatur gerührt. Die erhaltene viskose Lösung wird in 300 ml heißes Wasser gegossen, abfiltriert, mit Wasser und Aceton gewaschen und im Vakuumtrockenschrank bei 70 °C gewichtskonstant getrockent. Man erhält ein oligomeres Diamin mit einer inhärenten Viskosität von 0,10 dl/g (0,5 % in konz. $H_2SO_4$, 25 °C).
Ausbeute: 6,6 g (98 % d. Th.), Schmelzpunkt: 385 °C (mittels DSC ermittelt)

| | Analyse | |
|---|---|---|
| | berechnet (%) | gefunden (%) |
| $C_{88}$ | 63,89 | 62,96 |
| $H_{64}$ | 3,91 | 3,89 |
| $N_6$ | 5,08 | 4,81 |
| $S_9$ | 17,44 | 16,91 |
| $O_{10}$ | 9,67 | - |

b) Herstellung einer Polyamidsäure

Ansatz:

2,4812 g (1,5 mMol) Oligodiamin aus Beispiel 9a
0,4833 g (1,5 mMol) Benzophenontetracarbonsäuredianhydrid (BTDA)
12 ml abs. DMA
18 ml abs. HMP

Die Apparatur, bestehend aus einem 50 ml-Dreihalskolben mit mechanischem Rührer, Tropftrichter, Trockenrohr und Stickstoffeinleitung, wird im trockenen Stickstoffstrom ausgeflammt. Das Oligodiamin (aus Beispiel 9a) wird unter Stickstoff in 20 ml des Lösungsmittelgemisches aus DMA und HMP gelöst und auf ca. 10 °C abgekühlt. Zu disem abgekühlten Reaktionsgemisch wird BTDA auf einmal zugegeben, mit dem

restlichen Lösungsmittelgemisch aus DMA und HMP nachgespült und 30 Stunden bei Raumtemperatur gerührt. Man erhält eine Polyamidsäure mit einer inhärenten Viskosität von 0,45 dl/g (0,5 % in DMA, 25 °C), die analog zu Beispiel 1d) und e) chemisch bzw. thermisch zum Polyimid cyclisiert wurde.

Beispiel 10 und 11:

Analog der im Beispiel 9a) und b) angegebenen Arbeitsvorschriften erhält man die in den Tabellen 1 und 2 angegebenen oligomeren Diamine, Polyamidsäuren und Polyimide.

Beispiel 12:

Herstellung eines Polyamidimides

a) Herstellung eines oligomeren Diamines aus Isophthalsäuredichlorid (IPDCl) und 4,4′-Bis(4-aminophenylthio)diphenylsulfon (BDS)

Ansatz:

9,2928 g (20 mMol) BDS
2,7068 g (13 mMol) IPDCl
90 ml abs. DMA

Die Apparatur, bestehend aus einem 250 ml-Dreihalskolben mit mechanischem Rührer, Tropftrichter, Trockenrohr und Stickstoffeinleitung, wird im trockenen Stickstoffstrom ausgeflammt. Das Diamin (BDS) wird unter Stickstoff in 60 ml DMA gelöst und mit Eis/NaCl auf ca. -10 °C abgekühlt. Zu diesem abgekühlten Reaktionsgemisch wird IPDCl auf einmal zugegeben, mit restlichem DMA nachgespült, 2 Stunden bei -10 °C und 2 Stunden bei Raumtemperatur gerührt. Das erhaltene viskose Reaktionsgemisch wird in 500 ml heißes Wasser gegossen, abfiltriert, mit Wasser und Aceton gewaschen und im Vakuumtrockenschrank bei 70 °C gewichtskonstant getrocknet. Man erhält ein oligomeres Diamin mit einer inhärenten Viskosität von 0,08 dl/g (0,5 % in konz. $H_2SO_4$, 25 °C).

Ausbeute: 10,6 g (98 % d. Th.), Schmelzpunkt: 197 - 205 °C

| | Analyse | |
|---|---|---|
| | berechnet (%) | gefunden (%) |
| $C_{88}$ | 63,89 | 62,72 |
| $H_{64}$ | 3,91 | 4,12 |
| $N_6$ | 5,08 | 5,47 |
| $S_9$ | 17,44 | 16,76 |
| $O_{10}$ | 9,67 | - |

b) Herstellung einer Polyamidamidsäure

Ansatz:

2,4812 g (1,5 mMol) Oligodiamin aus Beispiel 12a)
0,3159 g (1,5 mMol) Trimellithsäureanhydridchlorid (TMACl)
30 ml abs. DMA
0,21 g (1,5 mMol) Triäthylamin

Die Apparatur, bestehend aus einem 50 ml-Dreihalskolben mit mechanischem Rührer, Tropftrichter, Trockenrohr und Stickstoffeinleitung, wird im trockenen Stickstoffstrom ausgeflammt. Das Oligodiamin aus Beispiel 12a) wird unter Stickstoff in 20 ml DMA gelöst und auf ca. -15 °C abgekühlt. Bei dieser Temperatur wird portionsweise TMACl in fester Form innerhalb von 10 Minuten zugegeben. Nach einer Stunde Rühren bei -5 °C und 9 Stunden Rühren bei Raumtemperatur wird bei 5 - 10 °C das Triäthylamin in 8 ml DMA zugetropft, drei Stunden bei Raumtemperatur gerührt und anschließend über Nacht bei ca. -15 °C in der Tiefkühltruhe aufbewahrt. Das ausgefallene Triäthylaminhydrochlorid wird unter Stickstoff mittels einer Umkehrfritte abfiltriert und mit insgesamt 10 ml DMA gewaschen. Man erhält eine Lösung einer Polyamidamidsäure mit einer inhärenten Viskosität von 0,39 dl/g (0,5 % in DMA, 25 °C), die analog zu Beispiel 1d) und e) chemisch bzw. thermisch zum Polyamidimid cyclisiert wurde.

Beispiel 13:

Analog der im Beispiel 12a) und b) angegebenen Arbeitsvorschriften erhält man die in den Tabellen 1 und 2 angegebenen oligomeren Diamine, Polyamidamidsäuren und Polyamidimide.

In Tabelle 1 sind die Zusammensetzung und das errechnete Molekulargewicht der Blöcke A (mit Aminoendgruppen) und B (mit Säureendgruppen), das Molverhältnis der diese Blöcke bildenden Bestandteile, sowie die inhärente Viskosität der durch Umsetzung von A und B erhaltenen, noch nicht cyclisierten Polymeren angegeben. In den Beispielen 9 bis 13 wurden an Stelle der oligomeren Blöcke B monomere Säurederivate eingesetzt. In Tabelle 2 sind die Eigenschaften der daraus erhaltenen cyclisierten Polymeren zusammengefaßt.

| Abkürzungen, die in Tabelle 1 und 2 verwendet werden | |
|---|---|
| BDS | 4,4′-Bis(4-aminophenylthio)diphenylsulfon |
| DS | Bis(4-aminophenyl)sulfon |
| MDA | 4,4′-Methylendianilin |
| BTDA | Benzophenontetracarbonsäuredianhydrid |
| TMACl | Trimellithsäureanhydridchlorid |
| IPDCl | Isophthalsäuredichlorid |
| TPDCl | Terephthalsäuredichlorid |
| PA | Polyamid |
| PAS | Polyamidsäure |
| PAAS | Polyamidamidsäure |
| PI | Polyimid |
| PAI | Polyamidimid |
| BCP | Blockcopolymer |
| MGth | Das aus dem eingesetzten Molverhältnis der Reaktionspartner berechnete theoretische Molekulargewicht |
| visc | inhärente Viskosität (dl/g), 0,5 % in DMA bzw. in konz. $H_2SO_4$, 25 °C |
| TGA | Thermostabilität - jene Temperatur, bei der die Polymeren im Luftstrom 5 % ihres ursprünglichen Gewichtes verloren haben (Thermogravimetrische Analyse) |
| Tg | Glastemperatur |
| Tm | Schmelztemperatur |

Tabelle 1

| | Block A: | (Molverh.) | MGth | Block B: | (Molverh.) | MGth | Polymer: (A + B) | visc (dl/g) |
|---|---|---|---|---|---|---|---|---|
| 1 | BDS + IPDCl | (1:0,75) | 2250 | BTDA + MDA | (1:0,78) | 2150 | PA-PAS | 0,47[a] |
| 2 | BDS + IPDCl | (1:0,80) | 2850 | BTDA + MDA | (1:0,8) | 2400 | PA-PAS | 0,60[a] |
| 3 | BDS + TPDCl | (1:0,75) | 2250 | BTDA + MDA | (1:0,78) | 2150 | PA-PAS | 0,38[a] |
| 4 | BDS + IPDCl | (1:0,71) | 1950 | TMACl + MDA | (1:0,8) | 2000 | PA-PAAS | 1,01[a] |
| 5 | BDS + TPDCl | (1:0,8) | 2850 | IPDCl + MDA | (1:0,8) | 1550 | PA-$PA_1$ | 0,31[b] |
| 6 | BDS + IPDCl | (1:0,75) | 2250 | IPDCl + MDA | (1:0,75) | 1200 | PA-$PA_1$ | 0,35[b] |
| 7 | BDS + IPDCl | (1:0,83) | 3450 | IPDCl + DS | (1:0,83) | 2100 | PA-$PA_1$ | 0,33[b] |
| 8 | BDS + TPDCl | (1:0,75) | 2250 | TPDCl + DS | (1:0,83) | 2100 | PA-$PA_1$ | 0,23[b] |
| 9 | BDS + TPDCl | (1:0,66) | 1650 | BTDA | | | PI | 0,41[a] |
| 10 | BDS + TPDCl | (1:0,75) | 2250 | BTDA | | | PI | 0,34[a] |
| 11 | BDS + IPDCl | (1:0,66) | 1650 | BTDA | | | PI | 0,41[a] |
| 12 | BDS + IPDCl | (1:0,66) | 1650 | TMACl | | | PAI | 0,39[a] |
| 13 | BDS + TPDCl | (1:0,66) | 1650 | TMACl | | | PAI | 0,35[a] |

a in DMA
b in konz. $H_2SO_4$

Tabelle 2

| | Polymer | Tg (°C) | Tm (°C) | TGA (°C) | Zugfestigkeit (MPa) | E-Modul (MPa) | Reißdehnung (%) |
|---|---|---|---|---|---|---|---|
| 1 | PA-PI | 265 | | 471 | 96±4 | 2200±300 | 7±1 |
| 2 | PA-PI | 258 | | 477 | 104±3 | 2100±300 | 11±1 |
| 3 | PA-PI | 240 | 367 | 480 | | | |
| 4 | PA-$PA_1$ | 248 | | 454 | 106±3 | 2400±200 | 14±1 |
| 5 | PA-$PA_1$ | 195 | 360 | 463 | | | |
| 6 | PA-$PA_1$ | 224 | 358 | 450 | | | |
| 7 | PA-$PA_1$ | 223 | 430 | 452 | | | |
| 8 | PA-$PA_1$ | 265 | 363 | 477 | | | |
| 9 | PI | 233 | 365 | 468 | | | |
| 10 | PI | 235 | 368 | 477 | | | |
| 11 | PI | 240 | | 505 | 83±4 | 2100±200 | 7±1 |
| 12 | PAI | 227 | | 452 | 91±4 | 2600±200 | 8±1 |
| 13 | PAI | 252 | 368 | 477 | | | |

**Patentansprüche**
**Patentansprüche für folgende Vertragsstaaten : AT, BE, CH, DE, FR, GB, GR, IT, LI, LU, NL, SE,**

**1.** Lösliche und/oder schmelzbare Polyamid-Polyamid-(PA-$PA_1$-), Polyamid-Polyamidimid(PA-PAI) oder Polyamid-Polyimid(PA-PI-) Blockcopolymere der allgemeinen Formel I

$$\left[ X \left[ R\text{-}NH\text{-}CO\text{-}R_1\text{-}CO\text{-}NH \right]_x R\text{-}Y\text{-}B \right]_n \qquad I$$

in der n eine ganze Zahl von 1 bis 200,
x eine ganze Zahl von 1 bis 20,
$R_1$ einen divalenten aromatischen Rest,
R den Rest der allgemeinen Formel II

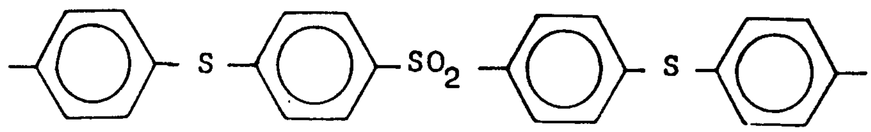
II

bedeuten, sowie

a) im Falle der PA-$PA_1$-Blockcopolymeren
X den Rest -NH-,
Y den Rest -NH-CO-,
wobei jeweils N an R gebunden ist und
B einen Rest der allgemeinen Formel III

$\{R_2\text{-CO-NH-}R_3\text{-NH-CO}\}_y R_2\text{-CO-}$ III

bedeuten, worin y eine ganze Zahl von 1 bis 20,
$R_2$ einen divalenten aromatischen Rest und
$R_3$ einen von R verschiedenen, divalenten aromatischen Rest bedeuten,

b) im Falle der PA-PAI-Blockcopolymeren entweder:
X den Rest = N-,
Y den Rest -NH- und
B den Rest der allgemeinen Formel IV

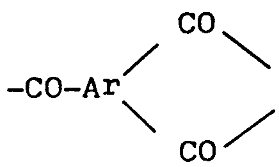
IV

bedeuten,
worin Ar für einen trivalenten aromatischen Rest steht,
oder: X und Y den Rest =N- und
B den Rest der allgemeinen Formel V

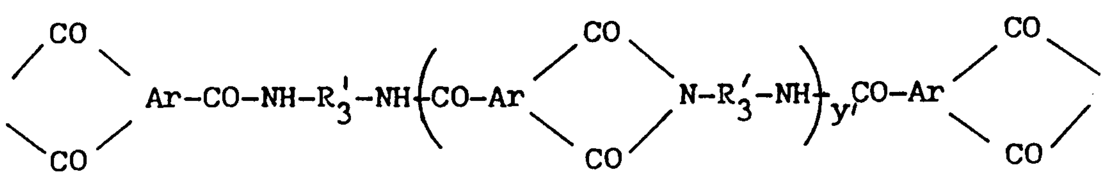
V

bedeuten,
worin y' für eine ganze Zahl von 0 bis 20 und $R_{3'}$ für R oder einen divalenten aromatischen Rest steht und Ar die obige Bedeutung hat,

c) im Falle der PA-PI-Blockcopolymeren
X und Y den Rest =N- und
B den Rest der allgemeinen Formel VI

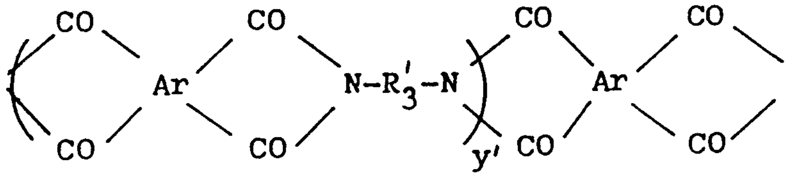
VI

bedeuten, worin y' für eine ganze Zahl von 0 bis 20 und $R_{3'}$ für R oder einen divalenten

aromatischen Rest und Ar für einen tetravalenten aromatischen Rest steht.

2. Blockcopolymere gemäß Anspruch 1, dadurch gekennzeichnet, daß die tetravalenten aromatischen Reste Benzolreste, Benzophenonreste oder deren Gemische darstellen.

3. Blockcopolymere gemäß Anspruch 1 oder 2, dadurch gekennzeichnet, daß die trivalenten aromatischen Reste Benzolreste darstellen.

4. Blockcopolymere gemäß einem der Ansprüche 1 bis 3, dadurch gekennzeichnet, daß die divalenten aromatischen Reste Benzol-, Diphenylmethan-, Diphenylsulfon-Reste oder deren Gemische darstellen.

5. Verfahren zur Herstellung von Blockcopolymeren gemäß einem der Ansprüche 1 bis 4, dadurch gekennzeichnet, daß man einen Polyamidblock der allgemeinen Formel VII

$H_2N \{ R\text{-}NH\text{-}CO\text{-}R_1\text{-}CO\text{-}NH \}_x R\text{-}NH_2$ VII

worin R, $R_1$ und x die Bedeutung wie oben angegeben haben,
a) im Falle dar PA-$PA_1$-Blockcopolymeren mit einem Polyamidblock der allgemeinen Formel VIII

$ZOC \{ R_2\text{-}CO\text{-}NH\text{-}R_3\text{-}NH\text{-}CO \}_y R_2\text{-}COZ$ VIII

worin y eine ganze Zahl von 1 bis 20 bedeutet, in der Z für Halogen, OH, O-Alkyl mit 1 bis 6 C-Atomen oder O-Aryl mit 6 bis 20 C-Atomen steht und $R_2$ und $R_3$ die obige Bedeutung haben,
b) im Falle der PA-PAI-Blockcopolymeren entweder mit einem Polyamidamidsäureblock der allgemeinen Formel IX

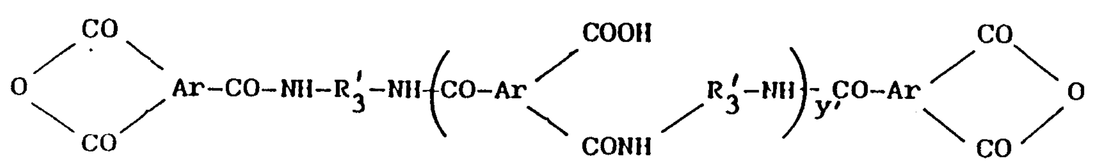
IX

worin y' eine ganze Zahl von 0 bis 20 bedeutet und $R_{3'}$ die obige Bedeutung hat,
oder mit Trimellithsäure bzw. deren Ester, Anhydrid oder Anhydridchlorid,
c) im Falle der PA-PI-Blockcopolymeren mit einem Polyamidsäureblock der allgemeinen Formel X

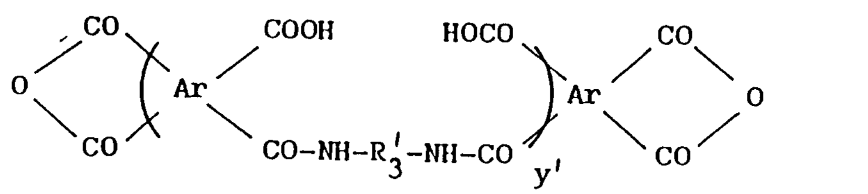
X

worin y' eine ganze Zahl von 0 bis 20 bedeutet und $R_{3'}$ die obige Bedeutung hat,
in annähernd stöchiometrischen Mengen umsetzt, und die im Falle der PA-PAI- und PA-PI-Blockcopolymeren zunächst entstehenden Polyamidamid-bzw. Polyamidsäuren chemisch oder thermisch cyclisiert.

6. Verfahren gemäß Anspruch 5, dadurch gekennzeichnet, daß man die Blöcke gemäß allgemeiner Formel VII bis X miteinander zu den gewünschten Blockcopolymeren umsetzt, ohne sie vorher aus dem Verdünnungsmittel, in dem sie hergestellt wurden, zu isolieren.

**Patentansprüche für folgenden Vertragsstaat : ES**

1. Verfahren zur Herstellung von löslichen und/oder schmelzbaren Polyamid-Polyamid-(PA-$PA_1$-), Polyamid-Polyamidimid-(PA-PAI-) oder Polyamid-Polyimid-(PA-PI-) Blockcopolymeren der allgemeinen

Formel I

$$\{X\{R\text{-}NH\text{-}CO\text{-}R_1\text{-}CO\text{-}NH\}_x R\text{-}Y\text{-}B\}_n \qquad I$$

in der n eine ganze Zahl von 1 bis 200,
x eine ganze Zahl von 1 bis 20,
$R_1$ einen divalenten aromatischen Rest,
R den Rest der allgemeinen Formel II

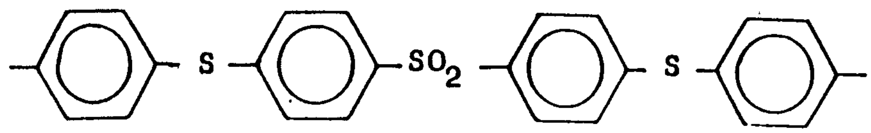

II

bedeuten, sowie

a) im Falle der PA-$PA_1$-Blockcopolymeren
X den Rest -NH-,
Y den Rest -NH-CO-,
wobei jeweils N an R gebunden ist und
B einen Rest der allgemeinen Formel III

$$\{R_2\text{-}CO\text{-}NH\text{-}R_3\text{-}NH\text{-}CO\}_y R_2\text{-}CO\text{-} \qquad III$$

bedeuten, worin y eine ganze Zahl von 1 bis 20,
$R_2$ einen divalenten aromatischen Rest und
$R_3$ einen von R verschiedenen, divalenten aromatischen Rest bedeuten,

b) im Falle der PA-PAI-Blockcopolymeren entweder:
X den Rest = N-,
Y den Rest -NH- und
B den Rest der allgemeinen Formel IV

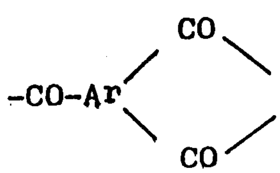

IV

bedeuten,
worin Ar für einen trivalenten aromatischen Rest steht,
oder: X und Y den Rest =N- und
B den Rest der allgemeinen Formel V

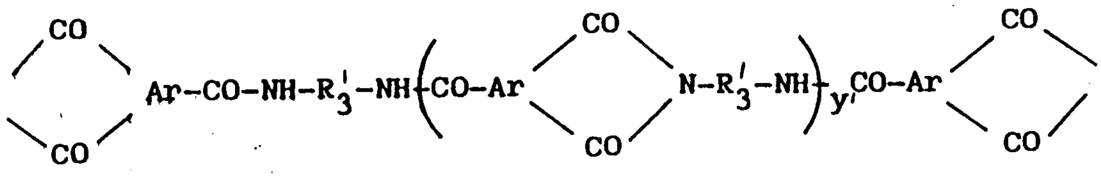

V

bedeuten,
worin y' für eine ganze Zahl von 0 bis 20 und $R_{3'}$ für R oder einen divalenten aromatischen Rest steht und Ar die obige Bedeutung bat,

c) im Falle der PA-PI-Blockcopolymeren
X und Y den Rest =N- und
B den Rest der allgemeinen Formel VI

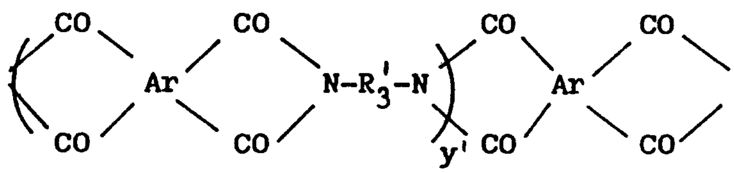 VI

bedeuten, worin y' für eine ganze Zahl von 0 bis 20 und $R_{3'}$ für R oder einen divalenten aromatischen Rest und Ar für einen tetravalenten aromatischen Rest steht, dadurch gekennzeichnet, daß man einen Polyamidblock der allgemeinen Formel VII

$H_2N{+}(R\text{-}NH\text{-}CO\text{-}R_1\text{-}CO\text{-}NH)_x\ R\text{-}NH_2$ VII

worin R, $R_1$ und x die Bedeutung wie oben angegeben haben,
a) im Falle der PA-$PA_1$-Blockcopolymeren mit einem Polyamidblock der allgemeinen Formel VIII

$$ZOC-(R_2-CO-NH-R_3-NH-CO)_y\ R_2-COZ$$ VIII

worin y eine ganze Zahl von 1 bis 20 bedeutet, in der Z für Halogen, OH, O-Alkyl mit 1 bis 6 C-Atomen oder O-Aryl mit 6 bis 20 C-Atomen steht und $R_2$ und $R_3$ die obige Bedeutung haben,
b) im Falle der PA-PAI-Blockcopolymeren entweder mit einem Polyamidamidsäureblock der allgemeinen-Formel IX

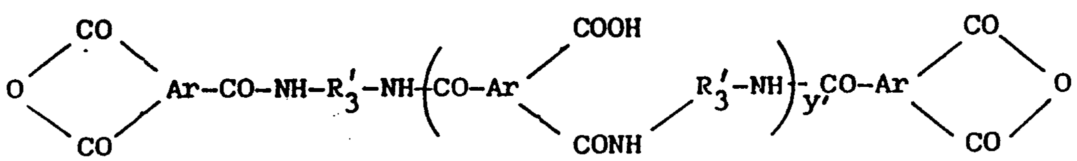 IX

worin y' eine ganze Zahl von 0 bis 20 bedeutet und $R_{3'}$ die obige Bedeutung hat,
oder mit Trimellithsäure bzw. deren Ester, Anhydrid oder Anhydridchlorid,
c) im Falle der PA-PI-Blockcopolymeren mit einem Polyamidsäureblock der allgemeinen Formel X

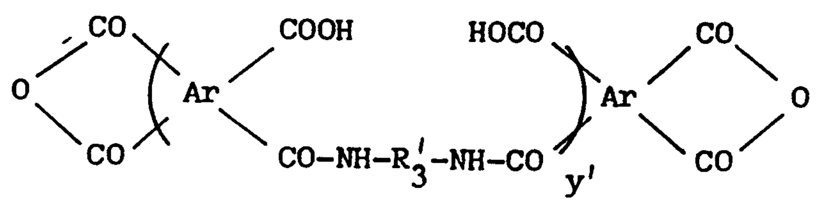 X

worin y' eine ganze Zahl von 0 bis 20 bedeutet und $R_{3'}$ die obige Bedeutung hat,
in annähernd stöchiometrischen Mengen umsetzt, und die im Falle der PA-PAI- und PA-PI-Blockcopolymeren zunächst entstehenden Polyamidamid- bzw. Polyamidsäuren chemisch oder thermisch cyclisiert.

2. Verfahren gemäß Anspruch 1, dadurch gekennzeichnet, daß die tetravalenten aromatischen Reste Benzolreste, Benzophenonreste oder deren Gemische darstellen.

3. Verfahren gemäß Anspruch 1 oder 2, dadurch gekennzeichnet, daß die trivalenten aromatischen Reste Benzolreste darstellen.

4. Verfahren gemäß einem der Ansprüche 1 bis 3, dadurch gekennzeichnet, daß die divalenten aromatischen Reste Benzol-,Diphenylmethan-, Diphenylsulfon-Reste oder deren Gemische darstellen.

5. Verfahren gemäß einem der Ansprüche 1 bis 4, dadurch gekennzeichnet, daß man die Blöcke gemäß allgemeiner Formel VII bis X miteinander zu den gewünschten Blockcopolymeren umsetzt, ohne sie vorher aus dem Verdünnungsmittel, in dem sie hergestellt wurden, zu isolieren.

$$-(X-(R-NH-CO-R_1-CO-NH)_x R-Y-B)_n$$ I

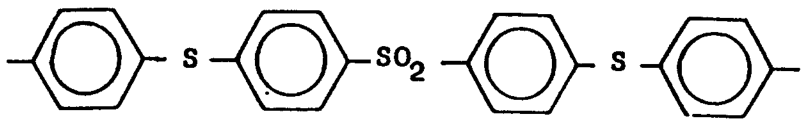

II

$$-(R_2-CO-NH-R_3-NH-CO)_y R_2-CO-$$ III

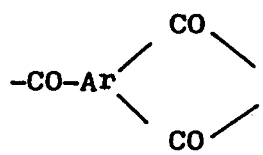

IV

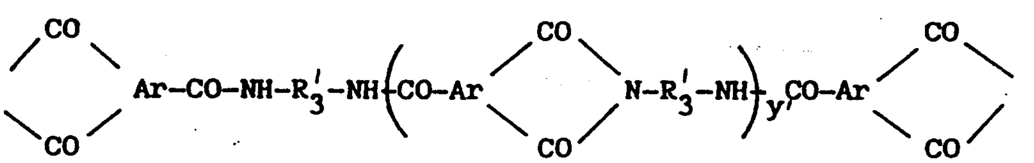

V

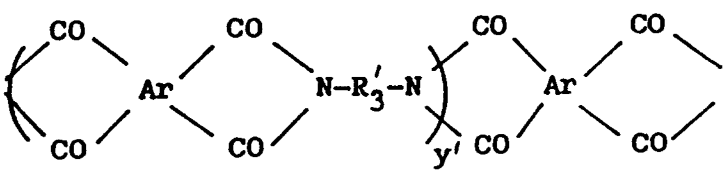

VI

$$H_2N-(R-NH-CO-R_1-CO-NH)_x R-NH_2$$ VII

$$ZOC-(R_2-CO-NH-R_3-NH-CO)_y R_2-COZ$$ VIII

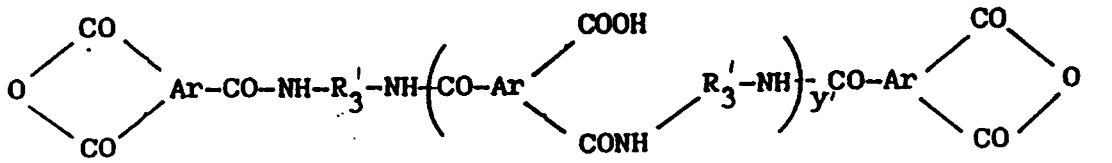

IX

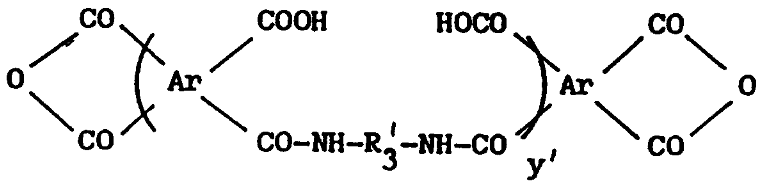

X

$H_2N-R-NH_2$ XI

$H_2N-R_3-NH_2$ XII

$H_2N-R'_3-NH_2$ XIII

## Claims

### Claims for the following Contracting States : AT, BE, CH, DE, FR, GB, GR, IT, LI, LU, NL, SE

**1.** Soluble and/or fusible polyamide-polyamide (PA-$PA_1$), Polyamide-polyamidoimide (PA-PAI) or polyamide-polyimide (PA-PI) block copolymer of the general formula I

$$\{X\{R\text{-}NH\text{-}CO\text{-}R_1\text{-}CO\text{-}NH\}_xR\text{-}Y\text{-}B\}_n \qquad I$$

in which n denotes an integer from 1 to 200, x denotes an integer from 1 to 20, $R_1$ denotes a divalent aromatic radical, R denotes the radical of the general formula II

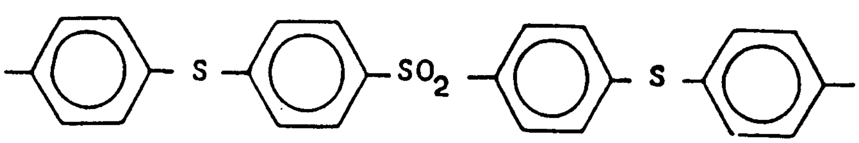

II

and

a) in the case of the PA-$PA_1$ block copolymer, X denotes the radical -NH-, Y denotes the radical -NH-CO-, N in each case being bonded to R, and B denotes a radical of the general formula III

$\{R_2\text{-CO-NH-}R_3\text{-NH-CO}\}_y R_2\text{-CO-}$     III

in which y denotes an integer from 1 to 20, $R_2$ denotes a divalent aromatic radical and $R_3$ denotes a divalent aromatic radical which differs from R,

b) in the case of the PA-PAI block copolymer, either: X denotes the radical =N-, Y denotes the radical -NH- and B denotes the radical of the general formula IV

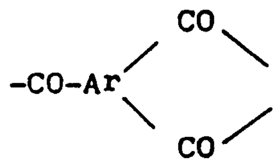

IV

in which Ar stands for a trivalent aromatic radical, or: X and Y denote the radical =N- and B denotes the radical of the general formula V

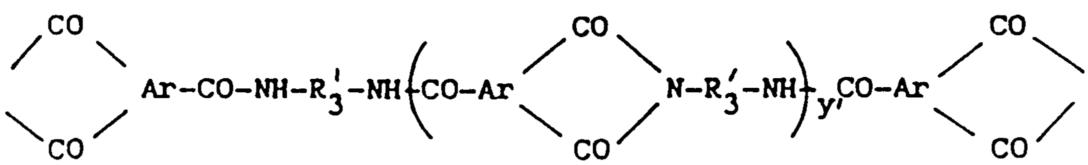

V

in which y' stands for an integer from 0 to 20, and $R_{3'}$ stands for R or a divalent aromatic radical and Ar has the above meaning, and

c) in the case of the PA-PI block copolymer, X and Y denote the radical =N- and B denotes the radical of the general formula VI

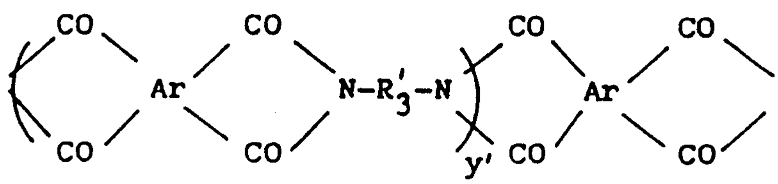

VI

in which y' stands for an integer from 0 to 20, and $R_{3'}$ stands for R or a divalent aromatic radical and Ar stands for a tetravalent aromatic radical.

**2.** Block copolymer according to Claim 1, characterised in that the tetravalent aromatic radicals represent benzene radicals, benzophenone radicals or mixtures thereof.

**3.** Block copolymer according to Claim 1 or 2, characterised in that the trivalent aromatic radicals represent benzene radicals.

**4.** Block copolymer according to any one of Claims 1 to 3, characterised in that the divalent aromatic radicals represent benzene, diphenylmethane or diphenyl sulphone radicals or mixtures thereof.

**5.** Process for the preparation of a block copolymer according to any one of Claims 1 to 4, characterised in that a polyamide block of the general formula VII

$H_2N\,\{R\text{-NH-CO-}R_1\text{-CO-NH}\}_x\, R\text{-}NH_2$     VII

in which R, $R_1$ and x have the meaning as indicated above, is reacted

a) in the case of the $PA\text{-}PA_1$ block copolymer: with a polyamide block of the general formula VIII

$$ZOC \left( R_2-CO-NH-R_3-NH-CO \right)_y R_2-COZ \qquad VIII$$

in which y denotes an integer from 1 to 20 and in which Z stands for halogen, OH, O-alkyl having 1 to 6 C atoms or O-aryl having 6 to 20 C atoms and $R_2$ and $R_3$ have the above meaning,

b) in the case of the PA-PAI block copolymer: either with a polyamidoamide acid block of the general formula IX

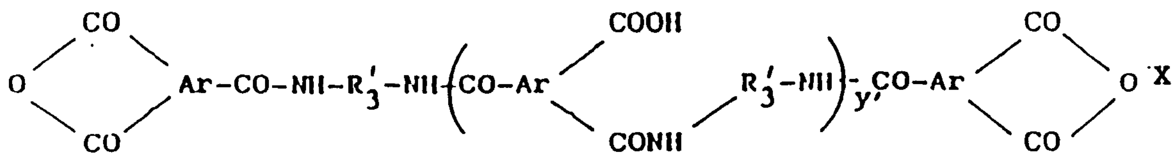

in which y' denotes an integer from 0 to 20 and $R_{3'}$ has the above meaning, or with trimellitic acid or esters or the anhydride or anhydride-chloride thereof, and

c) in the case of the PA-PI block copolymer: with a polyamide acid block of the general formula X

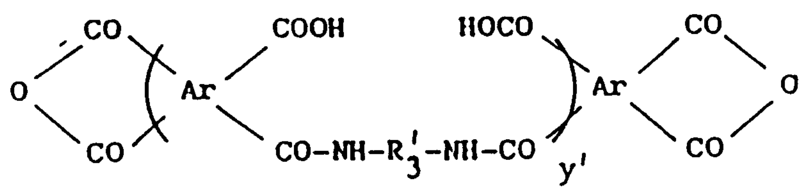

X

in which y' denotes an integer from 0 to 20 and $R_{3'}$ has the above meaning,

in approximately stoichiometric amounts, and the polyamidoamide acid or polyamide acid initially formed in the case of the PA-PAI and PA-PI block copolymer is subjected to chemical or thermal cyclisation.

**6.** Process according to Claim 5, characterised in that the blocks according to the general formulae VII to X are reacted with one another to give the desired block copolymer without first being isolated from the diluent in which they were prepared.

**Claims for the following Contracting State : ES**

**1.** Process for the preparation of a soluble and/or fusible polyamide-polyamide (PA-$PA_1$), polyamide-polyamidoimide (PA-PAI) or polyamide-polyimide (PA-PI) block copolymer of the general formula I

$$\left( X \left( R-NH-CO-R_1-CO-NH \right)_x R-Y-B \right)_n \qquad I$$

in which n denotes an integer from 1 to 200, x denotes an integer from 1 to 20, $R_1$ denotes a divalent aromatic radical, R denotes the radical of the general formula II

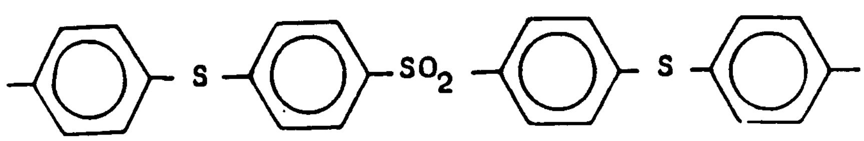

II

and

a) in the case of the PA-$PA_1$ block copolymer, X denotes the radical -NH-, Y denotes the radical -NH-CO-, N in each case being bonded to R, and B denotes a radical of the general formula III

$$\left( R_2-CO-NH-R_3-NH-CO \right)_y R_2-CO- \qquad III$$

in which y denotes an integer from 1 to 20, $R_2$ denotes a divalent aromatic radical and $R_3$ denotes a divalent aromatic radical which differs from R,
b) in the case of the PA-PAI block copolymer, either: X denotes the radical =N-, Y denotes the radical -NH-and B denotes the radical of the general formula IV

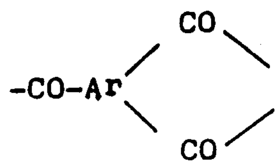

IV

in which Ar stands for a trivalent aromatic radical, or: X and Y denote the radical =N- and B denotes the radical of the general formula V

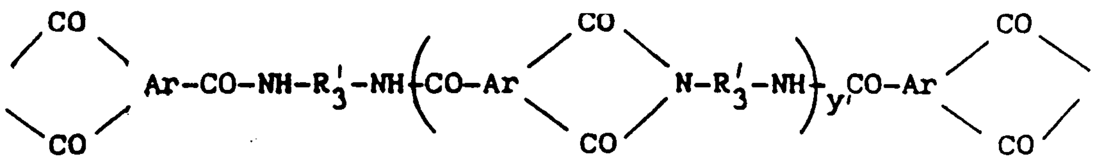

V

in which y' stands for an integer from 0 to 20, and $R_{3'}$ stands for R or a divalent aromatic radical and Ar has the above meaning, and
c) in the case of the PA-PI block copolymer, X and Y denote the radical =N- and B denotes the radical of the general formula VI

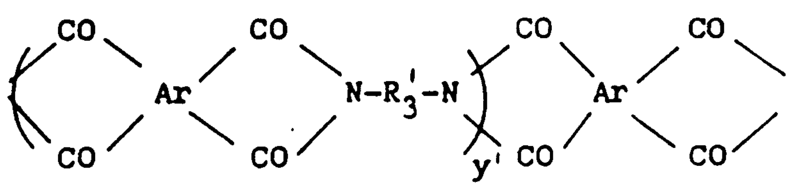

VI

in which y' stands for an integer from 0 to 20, and $R_{3'}$ stands for R or a divalent aromatic radical and Ar stands for a tetravalent aromatic radical, characterised in that a polyamide block of the general formula VII

$H_2N\{R\text{-}NH\text{-}CO\text{-}R_1\text{-}CO\text{-}NH\}_x R\text{-}NH_2$ VII

in which R, $R_1$ and x have the meaning as indicated above, is reacted
a) in the case of the PA-$PA_1$ block copolymer: with a polyamide block of the general formula VIII

$$ZOC\{R_2\text{-}CO\text{-}NH\text{-}R_3\text{-}NH\text{-}CO\}_y R_2\text{-}COZ \qquad VIII$$

in which y denotes an integer from 1 to 20 and in which Z stands for halogen, OH, O-alkyl having 1 to 6 C atoms or O-aryl having 6 to 20 C atoms and $R_2$ and $R_3$ have the above meaning,
b) in the case of the PA-PAI block copolymer: either with a polyamidoamide acid block of the general formula IV

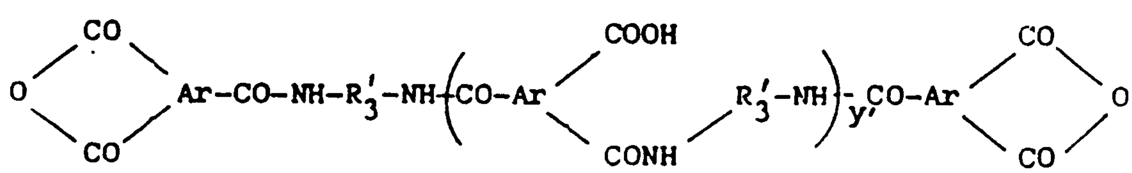

IX

in which y' denotes an integer from 0 to 20 and $R_{3'}$ has the above meaning, or with trimellitic acid or esters or the anhydride or anhydride-chloride thereof, and

c) in the case of the PA-PI block copolymer: with a polyamide acid block of the general formula X

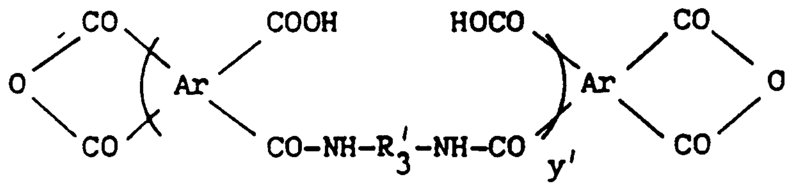

X

in which y' denotes an integer from 0 to 20 and $R_{3'}$ has the above meaning,

in approximately stoichiometric amounts, and the polyamidoamide acid or polyamide acid initially formed in the case of the PA-PAI and PA-PI block copolymer is subjected to chemical or thermal cyclisation.

**2.** Process according to Claim 1, characterised in that the tetravalent aromatic radicals represent benzene radicals, benzophenone radicals or mixtures thereof.

**3.** Process according to Claim 1 or 2, characterised in that the trivalent aromatic radicals represent benzene radicals.

**4.** Process according to any one of Claims 1 to 3, characterised in that the divalent aromatic radicals represent benzene, diphenylmethane or diphenyl sulphone radicals or mixtures thereof.

**5.** Process according to any one of Claims 1 to 4, characterised in that the blocks according to the general formulae VII to X are reacted with one another to give the desired block copolymer without first being isolated from the diluent in which they were prepared.

$$-\!\!\left(X\!\left(R-NH-CO-R_1-CO-NH\right)_x R-Y-B\right)_n$$ I

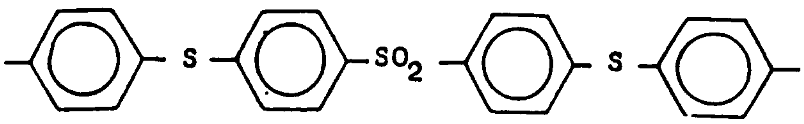

II

$$-\!\left(R_2-CO-NH-R_3-NH-CO\right)_y R_2-CO-$$ III

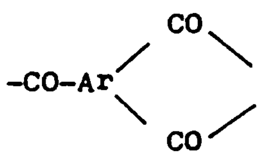

IV

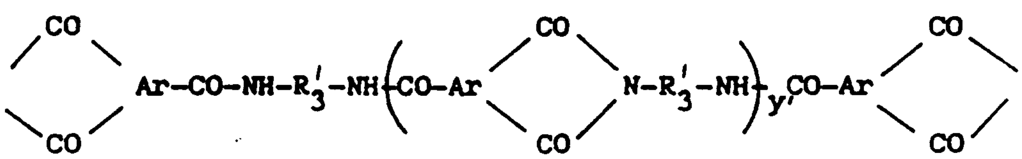

V

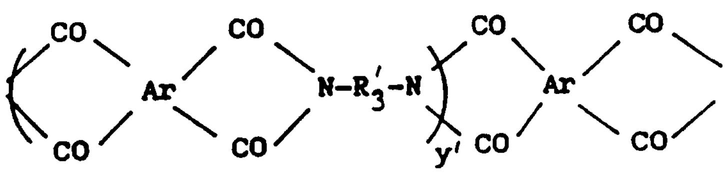

VI

$$H_2N\left(R-NH-CO-R_1-CO-NH\right)_x R-NH_2$$ VII

$$ZOC\left(R_2-CO-NH-R_3-NH-CO\right)_y R_2-COZ$$ VIII

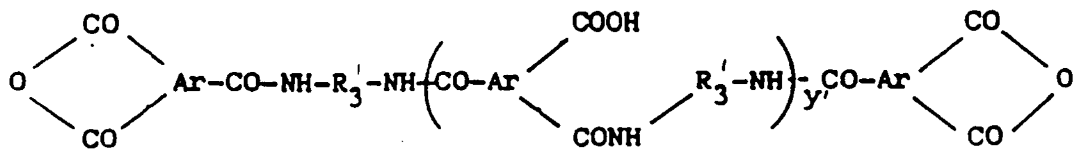
IX

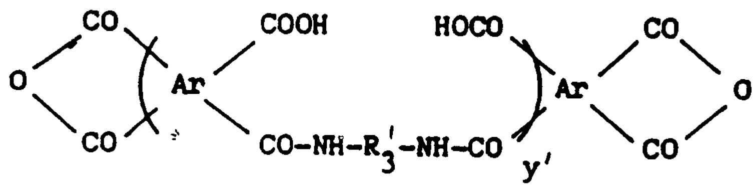
X

$H_2N-R-NH_2$ XI

$H_2N-R_3-NH_2$ XII

$H_2N-R_3'-NH_2$ XIII

## Revendications

## Revendications pour les Etats contractants suivants : AT, BE, CH, DE, FR, GB, GR, IT, LI, LU, NL, SE

**1.** Copolymères séquencés solubles et/ou fusibles du type polyamide-polyamide (PA-$PA_1$), polyamide-polyamideimide (PA-PAI) ou polyamide-polyimide (PA-PI) de formule générale I :

$$\{X\{R-NH-CO-R_1-CO-NH\}_xR-Y-B\}_n \qquad (I)$$

dans laquelle n représente un nombre entier compris entre 1 et 200,
x un nombre entier compris entre 1 et 20,
$R_1$ un reste aromatique divalent,
R un reste de formule générale II

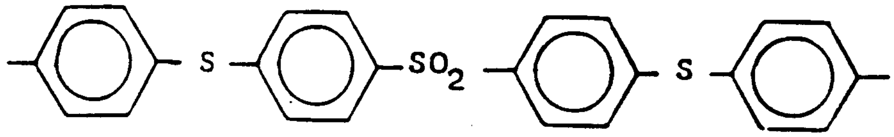
II

et,
(a) dans le cas des copolymères séquencés PA-$PA_1$
X représente le reste -NH-,
Y le reste -NH-CO-,

où N est à chaque fois relié à R, et
B un reste de formule générale III :

$\{R_2\text{-CO-NH-}R_3\text{-NH-CO}\}_y R_2\text{-CO-}$ (III)

dans laquelle y représente un nombre entier compris entre 1 et 20,
$R_2$ un reste aromatique divalent, et
$R_3$ un reste aromatique divalent différent de R,
(b) dans le cas des copolymères séquencés PA-PAI,
soit
X représente le reste =N-,
Y le reste -NH-, et
B le reste de formule générale IV :

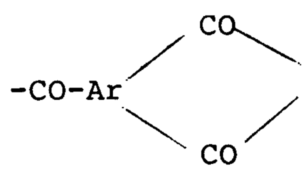

(IV)

dans laquelle Ar représente un reste aromatique trivalent,
soit :
X et Y représentent le reste =N-, et
B le reste de formule générale V

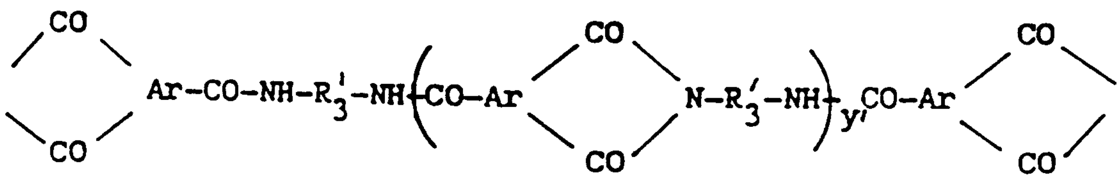

V

dans laquelle y' représente un nombre entier compris entre 0 et 20, $R_{3'}$ représente R ou un reste aromatique divalent et Ar a la signification donnée ci-dessus,
(c) dans le cas de copolymères séquencés PA-PI,
X et Y représentent le reste =N-, et
B le reste de formule générale VI :

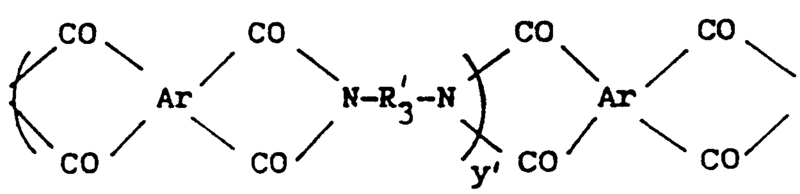

VI

dans laquelle y' représente un nombre entier compris entre 0 et 20, $R_{3'}$ représente R ou un reste aromatique divalent, et Ar un reste aromatique tétravalent.

**2.** Copolymères séquencés selon la revendication 1, caractérisés en ce que les restes aromatiques tétravalents représentent des restes benzénique, benzophénone ou leur mélange.

**3.** Copolymères séquencés selon la revendication 1 ou 2, caractérisés en ce que les restes aromatiques trivalents sont des restes benzéniques.

4. Copolymères séquencés selon l'une des revendications 1 à 3, caractérisés en ce que les restes aromatiques divalents sont des restes benzénique, diphénylméthane, diphénylsulfone ou leur mélange.

5. Procédé de préparation de copolymères séquencés selon l'une des revendications 1 à 4, caractérisé en ce qu'on fait réagir en quantité stochiométrique approximative une séquence polyamide de formule générale VII :

$H_2N\{R\text{-}NH\text{-}CO\text{-}R_1\text{-}CO\text{-}NH\}_xR\text{-}NH_2$ (VII)

dans laquelle R, $R_1$ et x ont les significations indiquées ci-dessus,

(a) dans le cas des copolymères séquencés PA-$PA_1$, avec une séquence polyamide de formule générale VIII :

$ZOC\{R_2\text{-}CO\text{-}NH\text{-}R_3\text{-}NH\text{-}CO\}_yR_2\text{-}COZ$ (VIII)

dans laquelle y représente un nombre entier compris entre 1 et 20, Z représente un halogène, OH, un groupe O-alkyle ayant 1 à 6 atomes de carbone ou un groupe O-aryle ayant 6 à 20 atomes de carbone, $R_2$ et $R_3$ ayant la signification indiquée ci-dessus,

(b) dans le cas des copolymères séquencés PA-PAI, avec une séquence acide polyamideamide de formule générale IX :

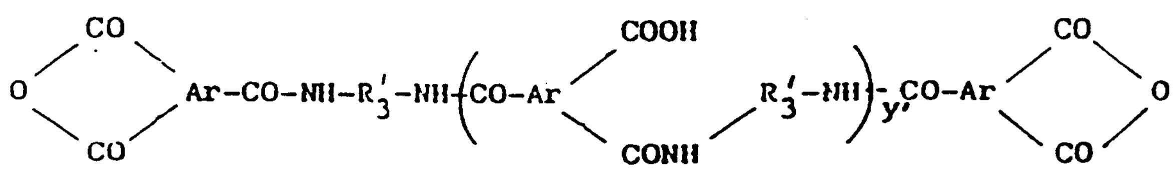

I X

dans laquelle y' est un nombre entier compris entre 0 et 20, et $R_{3'}$ a la signification indiquée ci-dessus, ou bien avec l'acide trimellitique ou l'ester, l'anhydride ou le chlorure d'anhydride correspondant,

(c) dans le cas des copolymères séquencés PA-PI, avec une séquence acide polyamide de formule générale X :

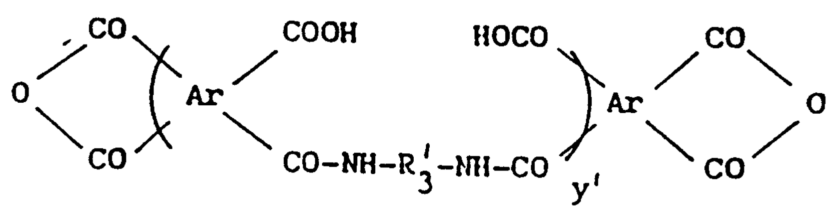

X

dans laquelle y' est un nombre entier de 0 à 20, et $R_{3'}$ a la signification indiquée ci-dessus,

et on réalise une cyclisation chimique ou thermique des acides polyamideamide ou polyamide obtenus dans le cas des copolymères séquencés PA-PAI et PA-PI.

6. Procédé selon la revendication 5, caractérisé en ce qu'on transforme les séquences selon les formules générales VII à X les unes avec les autres en copolymères séquencés souhaités, sans les isoler préalablement du milieu de dilution dans lequel ils ont été préparés.

**Revendications pour l'Etat contractant suivant : ES**

1. Procédé de préparation de copolymères séquencés solubles et/ou fusibles de type polyamide-polyamide (PA-$PA_1$), polyamide-polyamideimide (PA-PAI) ou polyamide-polyimide (PA-PI) de formule générale I :

$\{X\{R\text{-}NH\text{-}CO\text{-}R_1\text{-}CO\text{-}NH\}_xR\text{-}Y\text{-}B\}_n$ (I)

dans laquelle n représente un nombre entier compris entre 1 et 20,
x un nombre entier de 1 à 20,
$R_1$ un reste aromatique divalent
R un reste de formule générale II :

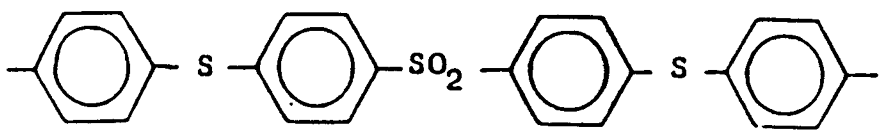

II

et,

(a) dans le cas des copolymères séquencés PA-$PA_1$
X représente le reste -NH-,
Y le reste -NH-CO-,
N étant à chaque fois relié à R, et
B désigne un reste de formule générale III :

$\{R_2\text{-}CO\text{-}NH\text{-}R_3\text{-}NH\text{-}CO\}_yR_2\text{-}CO\text{-}$ (III)

dans laquelle y est un nombre entier de 1 à 20,
$R_2$ est un reste aromatique divalent, et
$R_3$ un reste aromatique divalent différent de R,
(b) dans le cas des copolymères séquencés PA-PAI,
soit,
X désigne le reste =N-,
Y le reste -NH-, et
B le reste de formule générale IV :

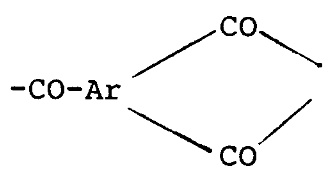

(IV)

dans laquelle Ar représente un reste aromatique trivalent,
soit,
X et Y représentent le reste =N-, et
B le reste de formule générale V :

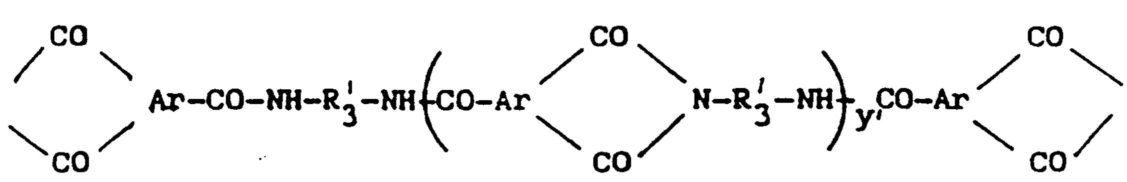

V

dans laquelle y' représente un nombre entier compris entre 0 et 20, $R_{3'}$ représente R ou un reste aromatique divalent et Ar a la signification indiquée ci-dessus,
(c) dans le cas des copolymères séquencés PA-PI
X et Y représentent le reste =N-, et
B un reste de formule générale VI :

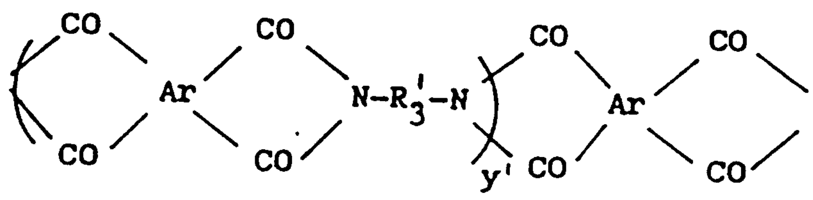

VI

dans laquelle y' représente un nombre entier compris entre 0 et 20, $R_{3'}$ représente R ou un reste aromatique divalent et Ar un reste aromatique tétravalent,

caractérisé en ce qu'on fait réagir en quantité stochiométrique approximative une séquence polyamide de formule générale VII :

$H_2N\{R\text{-}NH\text{-}CO\text{-}R_1\text{-}CO\text{-}NH\}_xR\text{-}NH_2$ (VII)

dans laquelle R, $R_1$ et x ont les significations indiquées ci-dessus,

(a) dans le cas des copolymères séquencés PA-$PA_1$, avec une séquence polyamide de formule générale VIII :

$ZOC\{R_2\text{-}CO\text{-}NH\text{-}R_3\text{-}NH\text{-}CO\}_yR_2\text{-}COZ$ (VIII)

dans laquelle y représente un nombre entier compris entre 1 et 20, Z représente un halogène, OH, un groupe O-alkyle ayant 1 à 6 atomes de carbone, ou un groupe O-aryle ayant 6 à 20 atomes de carbone, et $R_2$ et $R_3$ ont les significations indiquées ci-dessus,

(b) dans le cas des copolymères séquencés PA-PAI, soit avec une séquence acide polyamideamide de formule générale IX :

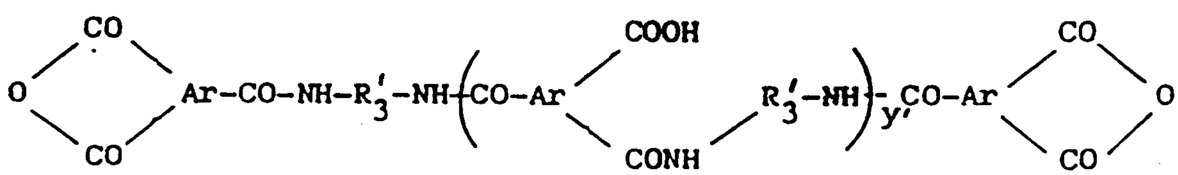

IX

dans laquelle y' représente un nombre entier compris entre 0 et 20 et $R_{3'}$ a la signification indiquée ci-dessus, l'acide trimellitique ou l'ester, l'anhydride ou le chlorure d'anhydride correspondant,

(c) dans le cas des copolymères séquencés PA-PI, avec une séquence acide polyamide de formule générale X :

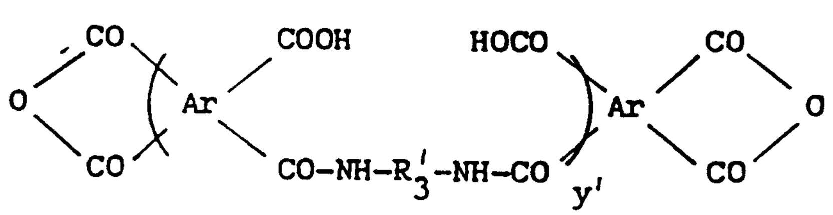

X

dans laquelle y' est un nombre entier de 0 à 20, et $R_{3'}$ a la signification indiquée ci-dessus,

et on réalise une cyclisation chimique ou thermique des acides polyamideamide ou polyamide obtenus dans le cas des copolymères séquencés PA-PAI et PA-PI.

2. Procédé selon la revendication 1, caractérisé en ce que les restes aromatiques tétravalents représentent des restes benzénique, benzophénone ou leur mélange.

3. Procédé selon la revendication 1 ou 2, caractérisé en ce que les restes aromatiques trivalents sont des restes benzéniques.

4. Procédé selon l'une des revendications 1 à 3, caractérisé en ce que les restes aromatiques divalents sont des restes benzénique, diphénylméthane, diphénylsulfone ou leur mélange.

5. Procédé selon l'une des revendications 1 à 4, caractérisé en ce qu'on transforme les séquences selon les formules générales VII à X les unes avec les autres en copolymères séquencés souhaités, sans les isoler préalablement du milieu de dilution dans lequel ils ont été préparés.

Feuille de formules

$\{X\{R-NH-CO-R_1-CO-NH\}_x R-Y-B\}_n$ I

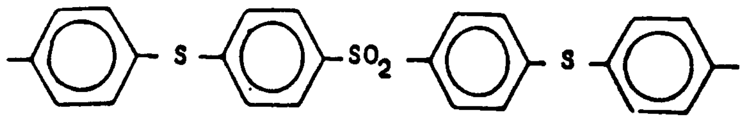

II

$\{R_2-CO-NH-R_3-NH-CO\}_y R_2-CO-$ III

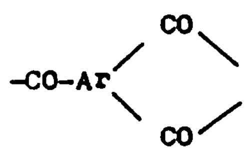

IV

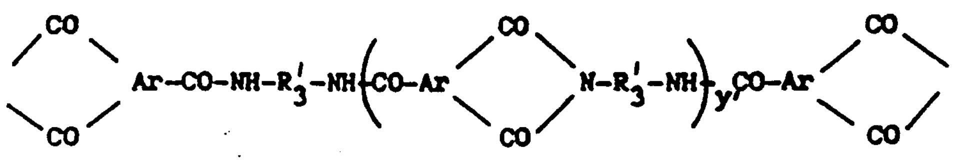

V

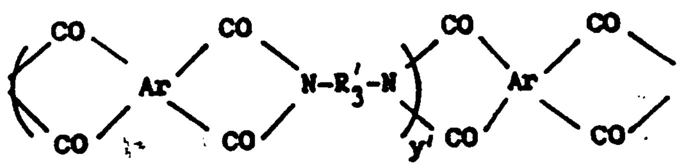

VI

$H_2N\{R-NH-CO-R_1-CO-NH\}_x R-NH_2$ VII

$ZOC\{R_2-CO-NH-R_3-NH-CO\}_y R_2-COZ$ VIII

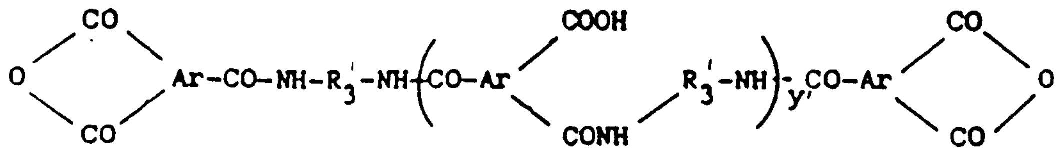

IX

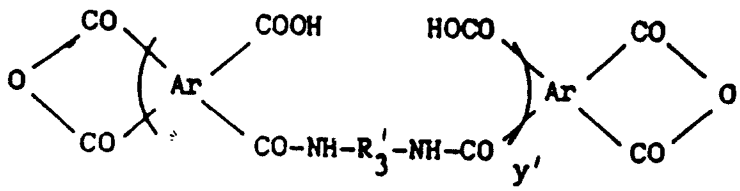

X

$H_2N-R-NH_2$ XI

$H_2N-R_3-NH_2$ XII

$H_2N-R_3'-NH_2$ XIII